# FASCICULE DE BREVET EUROPEEN

(11) **EP 2 773 997 B1**
(45) Date de publication et mention de la délivrance du brevet: **02.01.2019**
(21) Numéro de dépôt: 12786872.7
(22) Date de dépôt: 29.10.2012
(51) Int. Cl.: G02C 5/22, G02C 5/00

(54) **MONTURE DE LUNETTES A BRANCHES ROTATIVES**
BRILLENFASSUNG MIT DREHBÜGELN
SPECTACLE FRAME HAVING ROTATING ARMS

(30) Priorité: 02.11.2011 FR 1159905
(43) Date de publication de la demande: 10.09.2014
(73) Titulaire: Chêne, Richard, 92200 Neuilly (FR); Delamour, Dominique, 78490 Les Mesnuls (FR); Miklitarian, Alain, 75014 Paris (FR)
(72) Inventeur: CHENE, Richard, 92200 Neuilly (FR); DELAMOUR, Dominique, 78490 Les Mesnuls (FR); MIKLITARIAN, Alain, 75014 Paris (FR)
(74) Mandataire: Argyma
(86) Numéro de dépôt international: PCT/EP2012/071414
(87) Numéro de publication internationale: WO 2013/064470

(56) Documents cités:
- WO-A1-03/021335
- WO-A1-2010/007262
- FR-A1- 2 751 431
- GB-A- 626 533
- GB-A- 2 168 499

## Description

Le domaine de l'invention est celui des montures de lunettes. Une monture de lunettes comporte généralement une face avant prolongée par deux tenons latéraux, ainsi que deux branches articulées sur les tenons autour des axes d'articulation de deux charnières. Chaque charnière comprend un élément de face avant, solidaire du tenon latéral correspondant, et un élément de branche, solidaire de ladite branche, ces deux éléments étant articulés sur l'axe d'articulation de ladite charnière.

Les axes d'articulation des charnières sont sensiblement parallèles à la face avant. Ainsi, chaque branche peut, par rotation autour de l'axe d'articulation de la charnière correspondante, prendre successivement deux positions par rapport au tenon latéral auquel elle est associée. Dans une première position, dite d'ouverture, la branche prolonge le tenon et s'étend sensiblement à angle droit du plan général de la face avant, ce qui permet à la monture d'être portée. Dans une deuxième position, dite de fermeture, la branche est sensiblement parallèle à la face avant et plaquée contre celle-ci, ce qui permet de réduire le volume de la monture de lunettes.

L'inconvénient d'une telle monture de lunettes réside dans son épaisseur, en position de fermeture, qui ne peut être rendue suffisamment faible du fait de la forme des branches et des tenons. Cette épaisseur peut s'avérer d'autant plus élevée dans le cas de montures adaptées à la pratique de disciplines sportives où, pour éviter que le porteur ne perde - ou ait la sensation de perdre - sa monture, il importe que cette dernière épouse au plus près son visage, à tel point que les bords de la face avant soient quasiment parallèles à ses tempes.

WO03/021335A1, FR2751431A1, WO2010/007262A1, GB626533A et GB2168499 enseignent des montures de lunettes dont les branches sont articulées de manière à limiter l'encombrement, les branches se pliant à proximité de la face avant de la monture.

L'objet de la présente invention est de limiter, en position de fermeture, l'épaisseur de la monture de lunettes décrite ci-dessus, tout en conférant à son porteur des conditions de confort et de performance suffisantes, notamment lors de la pratique d'une discipline sportive.

Un autre objet de la présente invention est de permettre au porteur de la monture, lorsque celle-ci est sur son visage, de régler l'inclinaison de la face avant.

A cette fin, selon l'invention, la monture de lunettes, comprenant une face avant prolongée par deux tenons latéraux, ainsi que deux branches articulées sur les tenons autour des axes d'articulation de deux charnières, les charnières comprenant chacune un élément de face avant solidaire d'un tenon et un élément de branche solidaire d'une branche, chacune des branches étant agencée pour passer, par rotation autour dudit axe d'articulation, d'une position d'ouverture, pour laquelle ladite branche prolonge le tenon, à une position de fermeture, pour laquelle ladite branche est rapprochée de la face avant, est remarquable par le fait que, dans au moins l'une des charnières, l'axe d'articulation est sensiblement perpendiculaire au tenon et à la branche, et l'élément de face avant et l'élément de branche sont agencés de façon à ménager, entre ledit tenon et ladite branche, un espace de liberté du passage de la position d'ouverture à la position de fermeture.

Ainsi, grâce à la présente invention, en prévoyant des formes semblables des branches et de la face avant, lesdites branches peuvent pivoter autour des axes d'articulation des charnières, afin que lesdites branches soient, en position de fermeture, les plus proches possible de la face avant.

De surcroît, grâce à la présente invention, le porteur peut régler l'inclinaison de la face avant, en faisant pivoter celle-ci par rapport aux branches.

En outre, l'espace de liberté, pratiqué entre le tenon latéral et la branche, permet de donner du jeu entre ces deux pièces, de sorte que, lorsque ladite branche pivote autour de l'axe d'articulation de la charnière (et donc vis-à-vis dudit tenon), celles-ci ne frottent pas l'une contre l'autre, mais bénéficient au contraire d'une certaine liberté dans leurs mouvements relatifs, ce qui facilite le passage des branches de leur position d'ouverture à leur position de fermeture.

Selon un exemple, l'élément de face avant et l'élément de branche d'au moins une charnière sont respectivement une vis et un écrou borgne. Dans ce cas, la vis et l'écrou borgne de la charnière peuvent être fixés respectivement au tenon et à la branche par l'intermédiaire de joints toriques.

Selon l'invention, l'élément de face avant et l'élément de branche d'au moins une charnière sont respectivement une vis charnière et un écrou sphérique. Dans ce cas, l'écrou sphérique peut être au moins en partie enfoncé dans la branche.

Par ailleurs, afin de ménager un espace de liberté plus important entre la branche et le tenon latéral et ainsi faciliter d'autant plus la rotation de la branche vis- à-vis du tenon, un espace peut être ménagé entre ledit tenon et ladite branche pour le logement d'un ressort en compression, agencé pour venir en appui contre ledit tenon et ladite branche.

De préférence, un cran d'arrêt de rotation de la branche, en position de fermeture, est disposé sur le tenon et ladite branche, ce qui permet de bloquer ladite branche lorsqu'elle a atteint sa position de fermeture.

De préférence, les branches sont flexibles. Ainsi, lorsque les branches sont en position d'ouverture, la monture bénéficie d'une capacité d'adaptation à la forme du visage du porteur, tandis qu'en position de fermeture, celles-ci sont agencées pour se présenter au plus près de la face avant.

La présente invention concerne également une charnière pour monture de lunettes selon l'une des formes de réalisation décrites ci-dessus.

Selon une première forme de réalisation de la présente invention, la monture de lunettes comprend une face avant destinée à recevoir des verres généralement optiques et prolongée latéralement, de chaque côté, par un tenon latéral gauche et un tenon latéral droit. La monture comprend également une branche gauche , articulée sur le tenon latéral gauche autour de l'axe d'articulation d'une charnière gauche , ainsi qu'une branche droite , articulée sur le tenon latéral droit autour de l'axe d'articulation d'une charnière droite .

La branche gauche comporte deux extrémités : une extrémité arrière libre , dont la forme est adaptée à celle du visage du porteur, et une extrémité avant d'articulation , au niveau de laquelle ladite branche gauche est destinée à être articulée sur le tenon . De même, la branche droite comporte deux extrémités : une extrémité arrière libre , dont la forme est adaptée à celle du visage du porteur, en complément de l'extrémité arrière de la branche gauche , et une extrémité avant d'articulation , au niveau de laquelle ladite branche droite est destinée à être articulée sur le tenon .

Les charnières gauche et droite sont semblables. L'axe d'articulation de la charnière gauche est sensiblement perpendiculaire au tenon latéral gauche et à la branche gauche . De même, l'axe d'articulation de la charnière droite (désigné par la référence X-X') est sensiblement perpendiculaire au tenon latéral droit et à la branche droite .

De cette manière, par rotation de chacune des branches autour de l'axe d'articulation de la charnière qui lui est associée, ladite branche peut adopter soit une position d'ouverture, pour laquelle elle prolonge le tenon latéral qui lui est associé et s'étend sensiblement à angle droit du plan général de la face avant, soit
une position de fermeture, pour laquelle elle est sensiblement parallèle à la face avant et plaquée contre celle-ci.

Dans un exemple de la monture, la branche gauche est en position d'ouverture, tandis que la branche droite est en position de fermeture. Lorsque les deux branches sont en position d'ouverture, la monture est agencée pour être portée en entourant le crâne de son porteur. Lorsque les deux branches sont en position de fermeture, la monture présente une compacité optimale.

Cette disposition particulière des axes d'articulation des charnières présente l'avantage de rapprocher les branches de la face avant lorsque celles-ci sont en position de fermeture. A cet effet, les branches présentent une forme adaptée à la forme de la face avant, en particulier une forme semblable à celle de la face avant, de manière que lesdites branches puissent être plaquées de façon optimale contre ladite face avant. De plus, on notera que, par rotation des branches autour des axes d'articulation des charnières, le porteur peut régler de façon simple l'inclinaison de la face avant.

La charnière droite comprend un élément de face avant, solidaire du tenon latéral droit, et un élément de branche , solidaire de la branche droite. Dans cet exemple, l'élément de face avant présente la forme d'une vis et l'élément de branche présente la forme d'un écrou borgne apte à coopérer avec la vis. La vis et l'écrou borgne sont par ailleurs fixés respectivement au tenon latéral droit et à l'extrémité avant de la branche droite par l'intermédiaire de joints toriques référencés. Ainsi, la charnière droite permet de coupler le tenon latéral droit à l'extrémité avant de la branche droite .

En outre, selon la présente invention, la vis et l'écrou borgne formant la charnière droite sont agencés l'un par rapport à l'autre de manière que le tenon latéral droit et l'extrémité avant de la branche droite ne soient pas tout à fait plaqués l'un contre l'autre, mais ménagent au contraire un espace . Cet espace , qualifié d'espace de liberté, a pour fonction de permettre aux branches de passer simplement et sans frottement de leur position d'ouverture à leur position de fermeture (et inversement).

Ainsi, le tenon latéral droit et la branche droite peuvent disposer d'un jeu suffisant entre eux, de sorte que, lorsque ladite branche droite pivote autour de l'axe d'articulation X-X' (et donc vis-à-vis dudit tenon latéral droit), celle-ci ne frotte pas contre ledit tenon , ce qui facilite d'autant le passage de la branche de sa position d'ouverture à sa position de fermeture.

Un espace de liberté (non représenté) semblable à l'espace est également ménagé au niveau de la charnière gauche .

La structure de l'extrémité avant de la branche droite comporte tout d'abord un orifice pour le passage de la vis et de l'écrou borgne , ainsi qu'un plateau annulaire , incliné vers l'extérieur, qui entoure l'orifice et qui est destiné à être séparé du tenon par l'espace de liberté . La branche comporte également une cavité annulaire entourant le plateau . Elle comporte enfin un cran d'arrêt, en relation avec un élément de forme complémentaire disposé sur le tenon , de façon que, lorsque la branche droite atteint sa position de fermeture, la rotation de ladite branche soit arrêtée, à moins d'un effort mécanique additionnel.

Selon l'invention, la charnière droite (de même que la charnière gauche)
est remplacée par une charnière présentant un axe d'articulation Y-Y' également sensiblement perpendiculaire au tenon et à l'extrémité avant de la branche . Elle comporte un élément de face avant, solidaire du tenon et présentant la forme d'une vis, et un élément de branche , solidaire de la branche et dont la forme est celle d'une sphère présentant une rainure, afin d'enfoncer dans celle- ci l'extrémité de la vis .

Dans cette forme de réalisation, la vis et la sphère sont agencées l'une par rapport à l'autre de manière que le tenon et l'extrémité ne soient pas tout à fait plaqués l'un contre l'autre, mais ménagent au contraire un espace de liberté semblable à l'espace décrit ci-dessus. Cet espace permet aux branches de passer simplement et sans frottement de leur position d'ouverture à leur position de fermeture (et inversement).

Par ailleurs, le tenon présente, en regard de l'extrémité avant de la branche , une cavité agencée pour ménager un espace pour le logement d'un ressort . Ce ressort, disposé de façon à fonctionner en compression, s'appuie contre le tenon et la branche . De cette manière, l'espace de liberté peut être rendu plus large, dans la mesure où le ressort permet d'amortir un éloignement relatif de la branche et du tenon suivant une direction donnée, lorsque ladite branche pivote autour de l'axe d'articulation Y-Y'.

Un cran d'arrêt, pour empêcher la rotation de la branche en position de fermeture à moins d'un effort mécanique additionnel, est également disposé au niveau de la zone de couplage entre le tenon et ladite branche . Ce cran est ici disposé sur le tenon et est destiné à être mis en relation avec un élément (non représenté) de forme complémentaire disposé sur la branche .

## Revendications

1. Monture de lunettes comprenant une face avant prolongée par deux tenons latéraux,, ainsi que deux branches articulées sur les tenons autour des axes d'articulation X-X', Y-Y' de deux charnières, les charnières,, comprenant chacune un élément de face avant, solidaire d'un tenon et un élément de branche, solidaire d'une branche, chacune des branches étant agencée pour passer, par rotation autour dudit axe d'articulation X-X', Y-Y', d'une position d'ouverture, pour laquelle ladite branche prolonge le tenon, à une position de fermeture, pour laquelle ladite branche est plaquée contre la face avant, **caractérisée par le fait que**, dans au moins l'une des charnières,, l'axe d'articulation X-X', Y-Y' est sensiblement perpendiculaire au tenon et à la branche, et l'élément de face avant, et l'élément de branche, sont agencés de façon à ménager, entre ledit tenon et ladite branche, un espace de liberté, du passage de la position d'ouverture à la position de fermeture, l'élément de face avant et l'élément de branche d'au moins une charnière sont respectivement une vis charnière et un écrou sphérique dont la forme est une sphère, l'écrou sphérique étant au moins en partie enfoncé dans la branche .

2. Monture selon la revendication 1, dans laquelle un espace est ménagé entre le tenon et la branche pour le logement d'un ressort en compression, agencée pour venir en appui contre ledit tenon et ladite branche.

3. Monture selon l'une des revendications précédentes, dans laquelle un cran d'arrêt de rotation de la branche, en position de fermeture, est disposé sur le tenon et ladite branche.

4. Charnière pour monture de lunettes selon l'une des revendications précédentes, ladite charnière présentant un axe d'articulation X-X', Y-Y' autour duquel une branche, est articulée sur un tenon de ladite monture de lunettes, ladite charnière comprenant un élément de face avant solidaire d'un tenon et un élément de branche solidaire d'une branche, **caractérisée en ce que** ledit axe d'articulation est sensiblement perpendiculaire au tenon et à la branche, et **en ce que** l'élément de face avant et l'élément de branche sont agencés de façon à ménager, entre ledit tenon et ladite branche, un espace de liberté du passage de la position d'ouverture à la position de fermeture de ladite branche.

## Patentansprüche

1. Brillenfassung, umfassend eine Vorderseite, die von zwei seitlichen Zapfen verlängert ist, sowie zwei auf den Zapfen um Gelenkachsen X-X', Y-Y' von zwei Scharnieren angelenkte Schenkel, wobei die Scharniere jeweils ein Vorderseitenelement umfassen, das mit einem Zapfen fest verbunden ist, und ein Schenkelelement, das mit einem Schenkel fest verbunden ist, wobei jeder der Schenkel ausgebildet ist, um durch Rotation um die Gelenkachse X-X', Y-Y' von einer geöffneten Position, für welche der Schenkel den Zapfen verlängert, in eine geschlossene Position, für welche der Schenkel an der Vorderseite anliegt, zu wechseln, **dadurch gekennzeichnet, dass** in mindestens einem der Scharniere die Gelenkachse X-X', Y-Y' etwa senkrecht zum Zapfen und zum Schenkel ist, und das Vorderseitenelement und das Schenkelelement derart ausgebildet sind, dass zwischen dem Zapfen und dem Schenkel ein freier Platz für den Wechsel aus der geöffneten Position in die geschlossene Position des Schenkels eingerichtet ist, wobei das Vorderseitenelement und das Schenkelelement mindestens eines Scharniers jeweils eine Scharnierschraube und eine kugelige Mutter sind, deren Form eine Kugel ist, wobei die kugelige Mutter mindestens teilweise in den Schenkel eingelassen ist.

2. Fassung nach Anspruch 1, wobei zwischen dem Zapfen und dem Schenkel ein Platz für die Aufnahme einer komprimierten Feder eingerichtet ist, die ausgebildet ist, um sich auf dem Zapfen und dem Schenkel abzustützen.

3. Fassung nach einem der vorangehenden Ansprüche, wobei in geschlossener Position eine Rotationsrastnase des Schenkels auf dem Zapfen und dem Schenkel angeordnet ist.

4. Scharnier für Brillenfassung nach einem der vorangehenden Ansprüche, wobei das Scharnier eine Gelenkachse X-X', Y-Y' aufweist, um welche ein Schenkel auf einem Zapfen der Brillenfassung angelenkt ist, wobei das Scharnier ein Vorderseitenelement umfasst, das mit einem Zapfen fest verbunden ist, und ein Schenkelelement, das mit einem Schenkel fest verbunden ist, **dadurch gekennzeichnet, dass** die Gelenkachse etwa senkrecht zum Zapfen und zum Schenkel ist, und dass das Vorderseitenelement und das Schenkelelement derart ausgebildet sind, dass zwischen dem Zapfen und dem Schenkel ein freier Platz für den Wechsel aus der geöffneten Position in die geschlossene Position des Schenkels eingerichtet ist.

## Claims

1. Frame for spectacles comprising a front face extended by two lateral lugs, as well as two temples hinged on the lugs about the axes of articulation X-X', Y-Y' of two hinges, the hinges each comprising a front face element, integral with a lug and a temple element, integral with a temple, with each one of the temples being arranged to pass, via rotation about said axis of articulation X-X', Y-Y', from an open position, for which said temple extends the lug, to a closed position, for which said temple is thrust against the front face, **characterised by** the fact that, in at least one of the hinges, the axis of articulation X-X', Y-Y' is substantially perpendicular to the lug and to the temple, and the front face element, and the temple element, are arranged in such a way as to provide, between said lug and said temple, an area of freedom, of the passage from the open position to the closed position, the front face element and the temple element of at least one hinge are respectively a hinge screw and a ball nut of which the shape is a ball, the ball nut being at least partially sunk into the temple.

2. Frame according to claim 1, wherein a space is provided between the lug and the temple for the housing of compression spring, arranged to bear against said lug and said temple.

3. Frame according to one of the preceding claims, wherein a notch of stop of rotation of the temple, in the closed position, is arranged on the lug and said temple.

4. Hinge for frame for spectacles according to one of the preceding claims, said hinge having an axis of articulation X-X', Y-Y' about which a temple, is hinged on a lug of said frame for spectacles, said hinge comprising a front face element integral with a lug and a temple element integral with a temple, **characterised in that** said axis of articulation is substantially perpendicular to the lug and to the temple, and **in that** the front face element and the temple element are arranged in such a way as to provide, between said lug and said temple, an area of freedom of the passage from the open position to the closed position of said temple.
